# EUROPÄISCHE PATENTSCHRIFT

(11) **EP 0 386 295 B1**
(45) Veröffentlichungstag und Bekanntmachung des Hinweises auf die Patenterteilung: **28.07.1993**
(21) Anmeldenummer: 89104172.5
(22) Anmeldetag: 09.03.1989
(51) Int. Cl.: B23B 31/16

(54) **Zentrierspannelemente**
Device for centering and clamping
Dispositif de centrage et serrage

(43) Veröffentlichungstag der Anmeldung: 12.09.1990
(73) Patentinhaber: Fischer, David, D-63743 Aschaffenburg (DE); Kohlert, Rudolf, D-63811 Stockstadt (DE)
(72) Erfinder: Fischer, David, D-63743 Aschaffenburg (DE); Kohlert, Rudolf, D-63811 Stockstadt (DE)
(74) Vertreter: Bischof, Hans-Jochen, Dipl.-Ing.

(56) Entgegenhaltungen:
- FR-A- 1 332 313
- US-A- 1 426 541

## Beschreibung

Die Erfindung bezieht sich auf eine Zentrierspannanordnung mit linearer Kraftübertragung auf Zentrierspannbacken zum Spannen von Werkstücken mit gegenläufig angeordneten Schiebern über ein Gestänge, das hydraulisch, pneumatisch oder mechanisch betätigbar ist.

Es sind verschiedene Elemente bekannt, mit deren Hilfe Werkstücke mit Zentrierspanneinrichtungen gespannt werden. Dieses bezieht sich auf die nachfolgend geschilderten Spanneinrichtungen.

### Der Zentrierspannstock:

Hier werden zentrierende Spannbewegungen mittels einer Zahnstange und eines Ritzels oder mittels Rechts- und Linksgewinde erzeugt. Dem ersten Betrieb ist zueigen, daß die Rückhaltekraft immer nur so groß ist wie die Spannkraft. Es besteht somit wenig Spannsicherheit bei Bearbeitungsstößen, was besonders nachteilig für empfindliche Werkstücke ist, die nicht sehr fest gespannt werden dürfen. Das zweite Prinzip ist problematisch wegen der Ungenauigkeit durch das stetig noch zunehmende Gewindespiel und für die Handbetätigung bestimmt. Beide Prinzipien fallen unter den Begriff der Zweibackenanwendung. Die Backen sind entweder fest angeordnet oder nur auf Zentrierspannschiebern versetzbar, was einem Zentrierschraubstock immer nur einen bestimmten Spannbereich zuordnet.
- Sehr gravierend ist, daß auf die beweglichen Backen Kippmomente eingeleitet werden und die Reibung in den Führungen erhöhen. Dies wächst mit der Backenhöhe schnell an und bedingt aufwendige und lange Führung, sowie eine Begrenzung auf niedrige Spannhöhen.

### b) Das Keilhakenfutter:

Hier treibt ein oft als Kolben ausgebildeter, in der Mitte stehender Keilnutenhaken liegende Zentrierspannschieber an.
- Grundlegender Nachteil dieses Prinzips ist es, daß das Spiel des stehenden Kolbens direkt ein Spiel der gesamten Futtereinheit verursacht.
- Auch hier Höhenbegrenzung durch Kippmomente w.o. beschrieben.
- Bei Vierbackenkeilhakenfuttern sind hier immer beide Bewegungsrichtungen gekoppelt, sodaß nur paßgenaue Werkstücke zentriert werden, was dem Sinn des Zentrierens widerspricht, nämlich dem Ausmitten von Toleranzen.
- Große Bauhöhe durch den stehenden Antriebskolben und dessen notwendige Führungslänge, was besonders nachteilig beim stationären Einsatz ist.
- Auch hier können höchstens Aufsetzbacken auf den Zentrierspannschiebern versetzt werden. Die Größenvariabilität, aber auch der Platzbedarf, ist also immer so groß, wie das Futtergehäuse.

### c) Das Umlenkhebelfutter:

Nicht so sehr verbreitet, treibt ein senkrechter Hakenbolzen über winklig gebogene Umlenkhebel liegende Zentrierspannschieber an.
- Wie beim Ritzelschraubstock ist die Rückhaltekraft nur so groß, wie die Spannkraft.
- Höhenbegrenzung durch Kippmomente w.o.
- Große Bauhöhe w.o.
- Begrenzte Größenvariabilität w.o.
- Bei Vierbackenfuttern sind die Bewegungsrichtungen gekoppelt, w.o.

### d) Das Spiralfutter:

Hier werden radial sitzende Zentrierspannschieber meist von einer archimedischen Spirale angetrieben.
- Höhenbegrenzung durch Kippmomente w.o.
- Große Probleme dieses Prinzips sind Ungenauigkeit und Spiel, der Haupteinsatzbereich ist so die handbetätigte, einfachere Spannung.
- Die Größenvariabilität ist durch die Spirale noch begrenzter.
- Koppelung der Bewegungsrichtungen w.o.

Der Erfindung liegt die Aufgabe zugrunde, universelle Zentrierspannelemente zu entwickeln, die ohne die beschriebenen Nachteile auskommen, und die das zentrierende Spannen vor allem beim eher stationären Einsatz variabler, unaufwendiger und attraktiver machen.

Die Erfindung löst diese Aufgabe nach den Merkmalen des Anspruchs 1.
Zusammengefaßt: Etwa parallel zu Zentrierspannschiebern liegende Antriebsschieber treiben über Keilschrägen Umlenkbolzen an, welche ebenfalls über Keilschrägen Zentrierspannschieber bewegen.
Durch entsprechend gegenläufige Keilschrägen werden gegenläufige Zentrierspannschieber hervorgerufen, obwohl sich die Antriebsschieber jeweils nur in eine Richtung bewegen.

In den Unteransprüchen sind vorteilhafte Ausgestaltungen der Erfindung angeführt, die im Späteren anhand der Zeichnungen beschrieben werden.

Die Erfindung ermöglicht folgende Vorteile:
- Große Zentrierspannhöhen, höhenunabhängiger Wirkungsgrad. Da der Antrieb der Zentrierspannschieber über die abgewinkelt angeordneten Umlenkbolzen fast direkt an der Spannstelle eingeleitet werden kann, wird der Spanndruck nicht über Kippmomente auf bewegliche Teile, sondern über stationäre Gehäuseteile abgeführt. So können praktisch beliebige Höhen erreicht werden, die zudem keine Wirkungsgradverluste erbringen.
- Rückhaltekräfte.
   Durch die Reibungsverhältnisse der doppelten Bewegungsumlenkung mittels Keilschrägen (Multiplikationseffekt) können die Rückhaltekräfte ein Vielfaches der benötigten Spannkräfte betragen, sodaß das gefürchtete Verrutschen bei Bearbeitungsstößen nicht erfolgt. Auch empfindlichen Werkstücken, die nicht fest gespannt werden dürfen, kann so eine große Spannsicherheit entgegengebracht werden.
- Weitgreifende und variable Größen.
   Die erfindungsgemäßen Antriebsschieber ermöglichen eine ausschließliche Schubbetätigung, nämlich bei der Zustellbewegung von der einen, und bei der Rückstellbewegung von der anderen Seite. Sie können somit einfach aufgeteilt, und durch einfache, geführte Schubstangenstücke äußerst unaufwendig ergänzt werden.
   Die Zentrierspannung kann so in variable Einzelelemente in beliebigen Abständen auseinandergezogen werden, ohne etwa ein gesamtes Futtergehäuse vergrößern zu müssen. Auch großen Werkstücken ist so eine einfache Einzentrierung nicht mehr verwehrt.
- beliebige Kombinationen, auch mit unabhängigen Bewegungen.
   Mittels einfacher Kreuzungen der Antriebsschieber bzw. der Schubstangen, beispielsweise Dreier- und Vierer-, können jegliche feste oder variable Anordnungen aufgebaut werden.
   Ein großer Vorteil ist es, daß die Bewegungen in verschiedenen Richtungen dabei voneinander unabhängig sein können. So kann etwa ein Vierbackenfutter gebildet werden, das auch sehr paßungenaue Werkstücke ausgleichend zentrierspannt.
- geringe Bauhöhe(besonders wichtig für NC-Maschinen).
   Die Antriebsschieber können stangenförmig direkt als kraftbetätigte Kolben eingesetzt, oder von der Seite druckbeaufschlagt werden. Mit der Erfindung kann so wesentlich niedriger als mit einem stehenden Kolben gebaut werden. Desweiteren kann die Führung stehender Umlenkbolzen aufgrund deren Schlankheit sehr kurz und höhensparend ausgebildet werden, was etwa bei einem Keilhaken im Keilhakenfutter nicht der Fall ist. Besonders vorteilhaft ist schließlich, daß die gesamte Schieberumlenkungseinheit immer neben dem Werkstück plaziert werden kann, sodaß die für die Werkstückauflage relevante Höhe nur von durchlaufenden Antriebsschiebern bzw. Schubstangen bestimmt wird.
- Spielfreiheit.
   In den Führungen der Schieber und der Umlenkbolzen befindet sich Spiel.
   Durch die erfindungsgemäße Anordnung kann sich dieses über das Anlegen der Umlenkbolzen jedoch vollständig verpressen, sodaß sich, auch nach langer Benutzung, im Zentrierhub völlige Spielfreiheit einstellt.
- Schwimmende Spannung mit baugleichen Elementen.
   Erfindungsgemäße Elemente können -beispielsweise mittels variierter Druckbeaufschlagung- eine sich selbst an die schon bestimmte Werkstücklage anpassende Spannung mit großen Rückhaltekräften erzielen.
   Dies ist ein oft anwendbarer Zusatznutzen.
- Einfacher, robuster und kostengünstiger Aufbau, Zwangsschmierung der Umlenkeinheit und weitere Vorteile...

Diese teilweise und in Kombination ungekannten Vorteile machen den Einsatz einer zentrierenden Spannung auch beim eher stationären Einsatz in wesentlich mehr Fällen interessant. So besteht der Nutzen der Erfindung nicht nur in der direkten gewerblichen Anwendbarkeit, sondern auch darin, daß durch öfter angewendetes Zentrierspannen vor allem viel Material für Bearbeitungszugaben eingespart wird.

Ausführungs- und Ausgestaltungsbeispiele der Erfindung seien nun anhand der Zeichnungen beschrieben.

Es zeigen
Fig.1: Den Längsschnitt durch ein erfindungsgemäßes Element in fester Zweieranordnung;
Fig.2: Die perspektivische Ansicht eines Viereraufbaus variabler Einzelelemente;
Fig.3: Die Untersicht und den Längsschnitt eines Elementes als festes Dreibackenfutter;
Fig.4: Die Draufsicht eines Dreieraufbaus variabler Einzelelemente mit Dreierkreuzung;
Fig.5: Den Längsschnitt durch einen Aufbau zweier variabler Einzelelemente zur schwimmenden Spannung;
Fig.6: Den Längsschnitt und Seitenschnitt durch ein Element als optional zur schwimmenden Spannung einzusetzendes Zweibackenfutter.

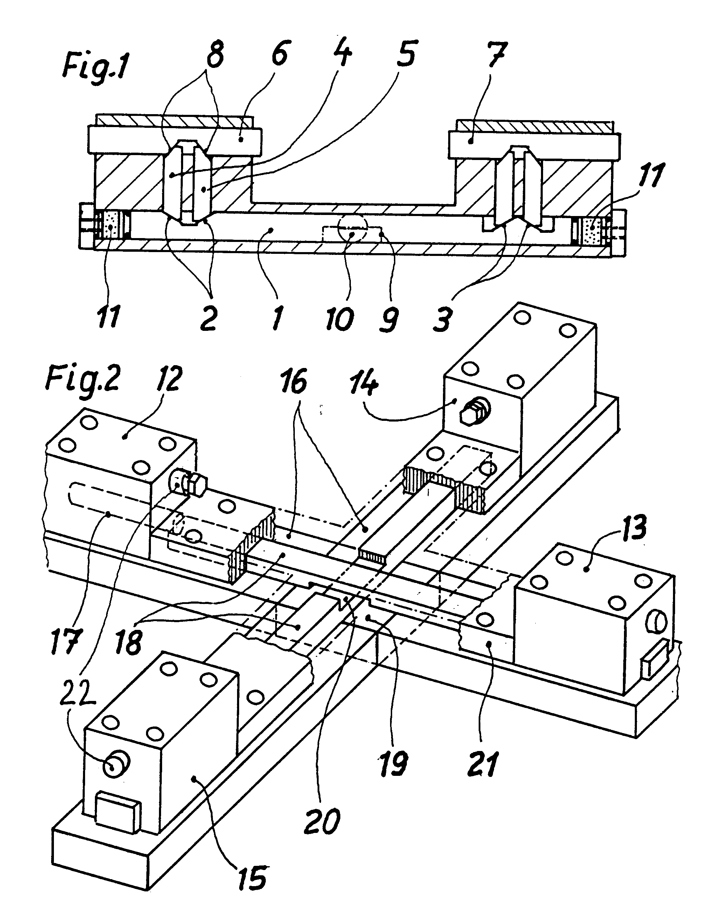

In einer festen Anordnung treibt in Fig. 1 ein parallel zu Zentrierspannschiebern(6) liegender Antriebsschieber(1) mittels Keilschrägen(2u.3) abgewinkelt angeordnete Umlenkbolzen(4u.5) an. Diese bewegen die gegenläufigen Zentrierspannschieber(6u.7) wiederum mittels Keilschrägen(8).
Die verschiedenen Keilschrägen sind nun so gegenläufig geneigt, daß bei Bewegung des Antriebsschiebers der linke Zentrierspannschieber(6) dazu bewegungsentgegengesetzt, und der rechte Zentrierspannschieber(7) bewegungsgleich verläuft.
Die Umlenkbolzen(4u.5) sind beidseitig stirnseitig angeschrägt, wirken ausschließlich auf Druck und greifen in konkave(2u.8) und konvexe(3) Prismen der Schieber ein. Dies ist eine sehr einfache und robuste Ausbildung. Ein Zentrierspannschieber(6) wird jeweils von zwei Umlenkbolzen(4u.5) angetrieben, die abwechselnd den Zentrierspannschieber bewegen und sich gegenseitig zwangsläufig zurückführen.
In der Mitte des Antriebsschiebers(1) ist eine Aussparung(9) angedeutet, durch die für einen Viereraufbau, wie er etwa in Fig.2 erklärt ist, ein gekreuztes Antriebsschieberteil(10) hindurchlaufen würde.
Der stangenförmige Antriebsschieber(1) bildet direkt einen hydraulischen Kolben; links und rechts befinden sich abwechselnd unter Druck gesetzte Öldruckkammern(11).
In dem hier gezeigten, einfachen Aufbau wird Spiel durch ein Anlegen der Umlenkbolzen verpresst, und durch die sich multiplizierenden Reibungsverhältnisse sehr große Rückhaltekraft erzeugt. Letzteres umso mehr, wenn die oberen Schrägen(8) steiler sind, als die unteren(2u.3). Bei der hier gezeigten Version beträgt die Rückhaltekraft etwa das Sechsfache der Spannkraft.

In Fig.2 sind die Zentrierspannelemente(12,13,14u.15) einzeln variabel ausgebildet und gegenüberliegend auf eine Rasterplatte(16) geschraubt. Die Antriebsschieber(17) stoßen unter Zwischenlage von Stangenstücken(18) aneinander, welche als einfache Schubstangen ausgebildet sind und beliebige Längen und damit Zentrierspanngrößen erlauben. Die Rasterplatte(16) ist an der Stangenkreuzungsstelle geteilt und über ein Verbindungsstück(19) strahlenförmig verschraubt.
Die Stangenkreuzung(20) weist Aussparungen der auf gleicher Höhe verlaufenden Stangenstücke(18) auf.
Die beiden Stangenstücke und damit die gekreuzten Bewegungsrichtungen sind voneinander wegunabhängig, und erlauben so ein unabhängiges Einzentrieren von zwei Seiten. Damit das Werkstück von einem Zentrierspannschieberpaar(12u.13) noch verschoben werden kann, nachdem das andere(14u.15) schon zugegriffen hat, müssen die Krafteinleitungen druckausgleichend miteinander verbunden sein.
Die Stangenstücke und die -kreuzung sind von variablen Tunnels(21) überdeckt, und zwar gegen Ausknicken oder Verschmutzen.
Mit den beidseitig herausragenden Zentrierspannschiebern(22) kann außen- und innenzentriergespannt werden. Außerdem sind auf sie zur Feineinstellung Stellschrauben geschraubt.
Der hier gezeigte variable Aufbau ermöglicht es erstmals, mit den selben einfachen Elementen kleinste und weit ausladende Zentrierspanngrößen zu verwirklichen, ohne dabei aufwendige Futtergrößen zu bedingen.

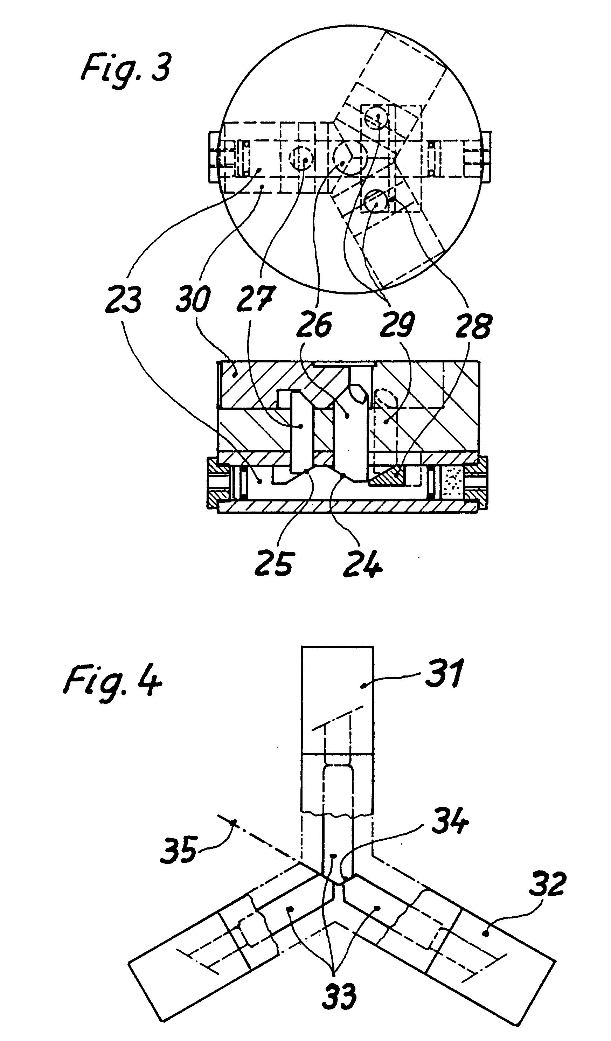

In einem Beispiel für ein festes Dreibackenfutter treibt in Fig.3 ein Antriebsschieber(23) über Keilschrägen(24u.25) in der Mitte einen Haupt-(26) und links einen Nebenbolzen(27) an. Ein auf dem Antriebsschieber sitzendes Keilstück(28) treibt rechts zwei weitere Nebenbolzen(29) an.
Die Zentrierspannschieber(30) werden nun von den oberen Keilschrägen des Hauptumlenkbolzens(26) nach außen gerichtet bewegt, und von denen der Nebenumlenkbolzen(27u.29) nach innen gerichtet.
Damit gleiche Wege erzeugt werden, müssen hier die oberen und unteren Keilschrägen der rechten Nebenumlenkbolzen(29) um 60 Grad gegeneinander verdreht sein.
Ein solches Futter hat zwar nur eine übliche, kleinere Größenvariabilität, überzeugt jedoch durch Rückhaltekraft, Robustheit, einfache Teile und die Spielfreiheit.

In Fig.4 verlaufen Schubstangenstücke(33) zwischen drei variablen Einzelelementen(31u.32), treffen sich mit dachartig schrägen Enden(34) und übertragen gleiche Wege, da die Winkel der schrägen Enden jeweils von der Winkelhalbierenden(35) bestimmt werden. Die Zustellbewegung wird nun z.B. auf das eine Element(31) eingeleitet, und die Rückstellbewegung auf die anderen beiden(32).
Mit solchen, und mit Viererkreuzungen, können mit den Elementen jegliche Zentrierspannanordnungen aufgebaut werden.

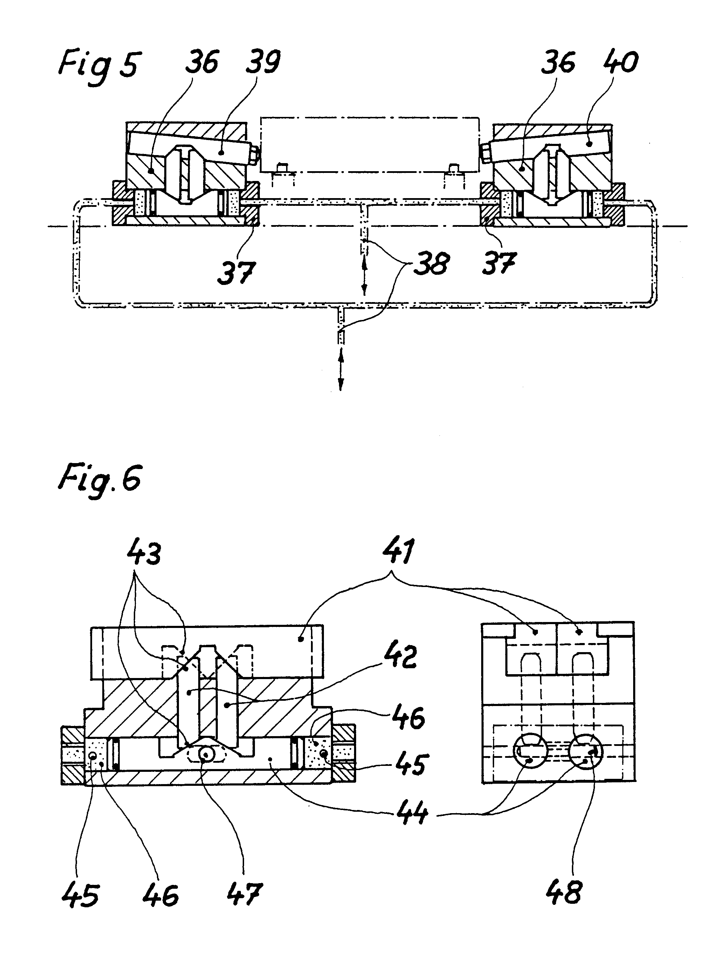

Zur schwimmenden Spannung sind variable Elemente(36) in Fig.5 auf der sonst durchbrochenen Seite mit einem Deckel(37) verschlossen und die hydraulischen Leitungen(38) wie dargestellt angeschlossen. Die Reibungsverhältnisse der doppelten Keilumlenkung bewirken nun, daß z.B. der linke Zentrierspannschieber(39) an eine schon bestimmte Werkstücklage heranfährt, dort auf den rechten(40) wartet, und beide(39u.40) das Werkstück verspannen. Die Rückhaltekräfte sorgen nun dafür, daß die Werkstücklage fest positioniert bleibt.
Um einen Niederzugeffekt zu erzielen, sind hier außerdem die Zentrierspannschieber(39u.40) leicht geneigt.

In Fig.6 weist ein festes Element zwei aneinanderliegende Zentrierspannschieber(41) auf, die über insgesamt vier Umlenkbolzen(42) mit gegenläufigen Keilschrägen(43) von zwei parallelen Antriebsschiebern(44) bewegt werden. Jeweils an beiden Enden der Antriebsschieber befinden sich paarweise mit Kanälen(45) verbundene Ölräume(46). Gegenüberliegende Querbohrungen(47) in den Antriebsschiebern erlauben das Einsetzen eines Stiftes(48) und damit das Verbinden der beiden Antriebsschieber(44). Ist dieser Stift nicht eingesetzt, kann, wie unter Fig. 5 erklärt, schwimmend gespannt werden.
Auch hier kann mit dem selben Element wieder "normal" zentriergespannt werden, nämlich indem der Stift(48) eingesetzt wird, und sich damit beide Antriebsschieber(44) gekoppelt bewegen.

## Patentansprüche

1. Zentrierspannanordnung mit linearer Kraftübertragung auf Zentrierspannschieber (6,7)zum Spannen von Werkstücken mittels eines hydraulisch, pneumatisch oder mechanisch betätigten Gestänges, **dadurch gekennzeichnet**,
- daß die Kraftübertragung vom Gestänge auf jeden Zentrierspannschieber (6,7) über paarweise senkrecht zum Antriebsschieber (1) angeordnete Umlenkbolzen (4,5) erfolgt,
- daß die Umlenkbolzen (4,5) an ihren Stirnflächen (2,3) abgeschrägt sind und auf der Antriebsseite mit ihren schrägen Enden in diese angepaßten Schrägen des Antriebsschiebers (1) eingreifen und auf der Abtriebsseite mit ihren Schrägen in die diesen angepaßten Schrägen der Spannschieber (6,7) eingreifen und
- daß die Schrägen eines Umlenkbolzenpaares (4,5) zur gedachten Mittellinie des Umlenkbolzenpaares gleichgerichtet sind und die Schrägen des zweiten Umlenkbolzenpaares zur gedachten Linie gegenläufig ausgebildet sind.

2. Zentrierspannanordnung nach Anspruch 1, **dadurch gekennzeichnet**,
- daß die Schrägen der Umlenkbolzen (4,5) bei einem Paar beidseitig so abgewinkelt sind, daß ihre Flächen (2,8) von der gedachten Mittellinie nach außen abfallend (dachförmig) gerichtet sind und daß das andere Paar einseitig von der gedachten Mittellinie nach außen abfallende (dachförmige) Schrägen und anderseitig von der gedachten Mittellinie nach außen steigende (umgekehrt dachförmige) Schrägen (3) aufweist.

3. Zentrierspannanordnung nach Anspruch 1 und 2, **dadurch gekennzeichnet**,
- daß der Antriebsschieber (1) stangenförmig und in Gänze oder in Teilen davon als kraftbetätigter Kolben ausgebildet ist.

4. Zentrierspannanordnung nach Anspruch 1 und 2, **dadurch gekennzeichnet**,
- daß die Stirnseiten der Umlenkbolzen (4,5) auf der einen Seite (8) einen steileren Winkel als auf der anderen Seite (2,3) aufweisen.

5. Zentrierspannanordnung nach Anspruch 1, **dadurch gekennzeichnet**,
- daß die Spannelemente in ihrer Position zueinander veränderbar und festsetzbar angeordnet sind, vorzugsweise auf Vorrichtungsplatten (16), die mit Nuten versehen sind.

6. Zentrierspannanordnung nach Anspruch 1 und 5, **dadurch gekennzeichnet**,
- daß die Spannelemente in beliebige Winkellagen zueinander anordbar sind.

7. Zentrierspannanordnung nach Anspruch 6 und 7, **dadurch gekennzeichnet**,
- daß das Gehäuse der Elemente zur mechanischen Verbindung der Antriebsschieber gegenüberüberliegender Elemente durchbrochen ist.

8. Zentrierspannanordnung nach Anspruch 1, **dadurch gekennzeichnet**,
- daß die Antriebsschieber aus Einzelelementen bestehen, die aneinanderstoßen.

9. Zentrierspannanordnung nach Anspruch 1 bis 8, **dadurch gekennzeichnet**,
- daß die Antriebsschieber (18) kreuzförmig angeordnet sind und aus Stangenstücken gebildet sind.

10. Zentrierspannanordnung nach Anspruch 1 bis 8, **dadurch gekennzeichnet**,
- daß die Antriebsschieber (23) mit drei Nebenumlenkbolzen versehen sind und daß die Stangenstücke (33) mit schrägen Enden versehen sind, die aneinanderstoßen, wobei die winkelhalbierende zweier zusammenstoßender Stangenstücke jeweils die Winkel der schrägen Enden bestimmt.

11. Zentrierspannanordnung nach Anspruch 10, **dadurch gekennzeichnet**,
- daß bei einer Dreieranordnung ein in der Mitte befindlicher Hauptumlenkbolzen (26) vorgesehen ist, der die Zentrierspannschieber (30) nach außen antreibt,
- daß drei Nebenumlenkbolzen (27,29) vorgesehen sind, die die Zentrierspannschieber (30) nach innen gerichtet antreiben,
- daß der Hauptumlenkbolzen (26) und einer der drei Nebenumlenkbolzen direkt von einem Antriebsschieber angetrieben sind und
- daß die anderen beiden Nebenumlenkbolzen von einem auf dem Antriebsschieber sitzenden Keilstück (28) angetrieben sind.

12. Zentrierspannanordnung nach Anspruch 1 und folgende, **dadurch gekennzeichnet**,
- daß die oberen Keilschrägen (24) der in Dreieranordnung ausgebildeten Antriebsschieber zentrisch zur Mitte eines Dreibackenfutters geneigt sind.

13. Zentrierspannelement nach Anspruch 1 und folgende, **dadurch gekennzeichnet**,
- daß die gekreuzten Antriebsschieber bzw. Stangenstücke mechanisch voneinander unabhängig sind.

## Claims

1. Centering clamping system with a linear transmission to locating clamping slides (6, 7) for clamping workpieces by means of a hydraulically, pneumatically or mechanically operated linkage, **characterized in**
- that the power is transmitted from said linkage to each of said locating clamping slides (6, 7) via reversing bolts (4, 5) disposed in pairs and orthogonally to the driving slide (1),
- that said reversing bolts (4, 5) are bevelled at their front sides (2, 3) and engaged on the input side by their inclined ends in matched inclined faces of said drive slide (1) and, on the output side, engaged by their inclined ends in matched inclined faces of said clamping slides (6, 7), and
- that said inclined ends of a pair of reversing bolts (4, 5) extend in the same direction as the imaginary centre line of said pair of reversing bolts while the inclined ends of the second pair of reversing bolts are configured to extend in opposition to said imaginary centre line.

2. Centering clamping system according to Claim 1, **characterized** in
- that said inclined ends of said reversing bolts (4, 5) in a pair are bent on either side such that their surfaces (2, 8) are oriented so as to slope from said imaginary centre line outwardly (roof-shaped) and that the other pair presents on one side inclined ends sloping from said imaginary centre line outwardly (in a roof shape) and on the other side inclined ends (3) rising from said imaginary centre line outwardly (inversely roof-shaped).

3. Centering clamping system according to Claims 1 and 2, **characterized** in
- that said driving slide (1) is rod-shaped and configured as power-operated piston either in its entirety or in parts.

4. Centering clamping system according to Claims 1 and 2, **characterized** in
- that the front sides of said reversing bolts (4, 5) present an angle on one sine (8) which is steeper than the angle on the other sine (2, 3).

5. Centering clamping system according to Claim 1, **characterized** in
- that said clamping elements are variable in terms of their relative positions and disposed for being fixed, preferably on grooved fixture plates (16).

6. Centering clamping system according to Claims 1 and 5, **characterized** in
- that said clamping elements may be disposed in any relative angular relationship.

7. Centering clamping system according to Claims 6 and 7, **characterized** in
- that the housing of said elements presents a passage for the mechanical connexion of the driving slides of opposing elements.

8. Centering clamping system according to Claim 1, **characterized** in
- that said driving slides are composed of separate elements contiguous to each other.

9. Centering clamping system according to Claims 1 to 8, **characterized** in
- that said driving slides (18) are disposed in a cross form and are formed of rod pieces.

10. Centering clamping system according to Claims 1 to 8, **characterized** in
- that said driving slides (23) are provided with three secondary reversing bolts and that said rod pieces (33) are provided with contiguous inclined ends, with the angle bissector of two contiguous rod pieces determining the respective angles of said inclined ends.

11. Centering clamping system according to Claim 10, **characterized** in
- that in one triple unit one centrally located main reversing bolt (26) is provided which urges said locating clamping slides (30) outwardly,
- that three secondary reversing bolts (27, 29) are provided which urge said locating clamping slides (30) in an inward direction,
- that said main reversing bolt (26) and one of said three secondary reversing bolts are driven directly by one driving slide, and
- that the other two secondary reversing bolts are driven by a wedge element (28) seated on said driving slide.

12. Centering clamping system according to Claim 1 and the following claims, **characterized** in
- that the upper inclined wedge surfaces (24) of said driving slides configured in a triple unit are centred on and inclined with respect to the centre of a three-jaw chuck.

13. Centering clamping system according to Claim 1 and the following claims, **characterized** in
- that crossed driving slides or rod pieces are mechanically independent of each other.

## Revendications

1. Dispositif de centrage et serrage à transmission de force linéaire à des coulisses de centrage et de serrage (6, 7) pour serrer des pièces à usiner, moyennant d'une tringlerie commandée de façon hydraulique, pneumatique ou mécanique, **caractérisé en ce**
- que la force est transmise de ladite tringlerie à chacune desdites coulisses de centrage et serrage (6, 7) par des axes de renvoi (4, 5) disposés en paires et perpendiculairement sur la coulisse d'entraînement (1),
- que lesdits axes de renvoi (4, 5) sont biseautés sur leurs faces (2, 3) et se trouvent en prise, du côté d'entrée, par leurs extrémités inclinées dans des faces inclinées conformées de ladite coulisse d'entraînement (1) et, du côté de sorte, en prise par leurs extrémités inclinées dans des faces inclinées conformées desdites coulisses de serrage (6, 7), et
- que les extrémités inclinées d'une paire d'axes de renvoi (4, 5) s'étendent en même sens que la ligne médiane imaginaire de ladite paire d'axes de renvoi pendant que les extrémités inclinées de la deuxième paire d'axes de renvoi sont configurées de façon qu'elles s'étendent en sens opposé à ladite ligne médiane imaginaire.

2. Dispositif de centrage et serrage selon la revendication 1, **caractérisé** en ce
- que lesdites extrémités inclinées desdites axes de renvoi (4, 5) d'une paire sont pliées des deux côtés de façon que leurs surfaces (2, 8) sont orientées selon une direction oblique de ladite ligne médiane imaginaire vers l'extérieur (en forme de toit) et que l'autre paire présente, d'un côté, des extrémités obliques selon une direction inclinée de ladite ligne médiane imaginaire vers l'extérieur (en forme de toit) et, de l'autre côté, des extrémités inclinées (3) montantes de ladite ligne médiane imaginaire vers l'extérieur (en forme de toit inverse).

3. Dispositif de centrage et serrage selon les revendications 1 et 2, **caractérisé** en ce
- que ladite coulisse d'entraînement (1) est en barres et configurée sous forme d'un piston configuré en tant que piston mécanique, soit complètement ou en partes.

4. Dispositif de centrage et serrage selon les revendications 1 et 2, **caractérisé** en ce
- que les faces desdits axes de renvoi (4, 5) présentent un angle de l'un côté (8) qui est à plus forte rampe que l'angle de l'autre côté (2, 3).

5. Dispositif de centrage et serrage selon la revendication 1, **caractérisé** en ce
- que des éléments de serrages sont variables dans leurs positions relatives et disposées pour être fixées, de préférence sur des plaques de monture à rainures (16).

6. Dispositif de centrage et serrage selon les revendications 1 et 5, **caractérisé** en ce
- qu'on peut dIsposer lesdits éléments de serrage à une relation angulaire relative quelconque.

7. Dispositif de centrage et serrage selon les revendications 6 et 7, **caractérisé** en ce
- que le carter desdits éléments présente un passage pour le raccord mécanique des coulisses d'entraînement des éléments opposés.

8. Dispositif de centrage et serrage selon la revendication 1, **caractérisé** en ce
- que lesdites coulisses d'entraînement sont constituées par des éléments séparés contigus l'un à l'autre.

9. Dispositif de centrage et serrage selon les revendications 1 à 8, **caractérisé** en ce
- que lesdites coulisses d'entraînement (18) sont disposées en forme croisée et constituées par des éléments en barres.

10. Dispositif de centrage et serrage selon les revendications 1 à 8, **caractérisé** en ce
- que lesdites coulisses d'entraînement (23) sont pourvues de trois axes de renvoi secondaires, et que lesdites éléments en barres (33) sont prévus des extrémités inclinées contigus, la bissectrice entre respectivement deux éléments en barres contigus définissant les angles respectifs desdites extrémités inclinées.

11. Dispositif de centrage et serrage selon la revendication 10, **caractérisé** en ce
- que dans une combinaison de trois unités est prévu un seul axe principal de renvoi (26) qui se trouve en centre et entraîne lesdites coulisses de centrage et de serrage (30) vers l'extérieur,
- que trois axes de renvoi secondaires (27, 29) sont prévus qui entraînent lesdites coulisses de centrage et de serrage (30) vers l'intérieur,
- que ledit axe principal de renvoi (26) et un parmi lesdits trois axes de renvoi secondaires sont entraînés directement par une coulisse d'entraînement, et
- que les autres deux axes de renvoi secondaires sont entraînés par un élément de clavet (28) serré sur ladite coulisse d'entraînement.

12. Dispositif de centrage et serrage selon la revendications 1 et les revendications suivantes, **caractérisé** en ce
- que les faces supérieures inclinées de clavet (24) desdites coulisses d'entraînement configurées sous forme d'une combinaison de trois unités sont centrées sur et inclinées relativement au centre d'un mandrin à trois griffes.

13. Dispositif de centrage et serrage selon la revendication 1 et les revendications suivantes, **caractérisé** en ce
- que les coulisses d'entraînement croisées ou les éléments en barres sont mécaniquement indépendants l'un de l'autre.
